(19) Europäisches Patentamt
European Patent Office
Office européen des brevets

(11) **EP 3 193 191 B1**

(12) **EUROPEAN PATENT SPECIFICATION**

(45) Date of publication and mention
of the grant of the patent:
**18.09.2019 Bulletin 2019/38**

(51) Int Cl.:
**G01S 13/74** *(2006.01)*   **G01S 15/74** *(2006.01)*
**G01S 13/87** *(2006.01)*   **G01S 15/87** *(2006.01)*

(21) Application number: **16151513.5**

(22) Date of filing: **15.01.2016**

(54) **METHOD AND SYSTEM FOR MEASURING LOCATION AND/OR ORIENTATION**

VERFAHREN UND SYSTEM ZUR MESSUNG VON STANDORT UND/ODER AUSRICHTUNG

PROCÉDÉ ET SYSTÈME DE MESURE D'EMPLACEMENT ET/OU D'ORIENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2017 Bulletin 2017/29**

(73) Proprietor: **Fraunhofer-Gesellschaft zur
Förderung der
angewandten Forschung e.V.
80686 München (DE)**

(72) Inventors:
• **Kroschel, Kristian
76337 Waldbronn (DE)**
• **Willersinn, Dieter
76139 Karlsruhe (DE)**
• **Chaudhary, Hafeez
1348 Louvain-La-Neuve (BE)**
• **Scheers, Bart
2840 Reet (BE)**
• **van Wijngaarden, Sander
2497 An Den Haag (NL)**
• **Hoffmann, Burghard
65232 Taunusstein (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**US-A1- 2005 035 897**   **US-A1- 2008 165 059**
**US-A1- 2014 057 655**   **US-A1- 2014 152 508**

## Description

Field of the invention

The present invention relates to a method and a system measuring location and/or orientation of one or several communication devices. The invention also relates to low-uncertainty location and orientation measurements, in particular based on coded signals, time-to-digital conversion, and matched filters.

State of the Art

Several methods have been proposed in the prior art for measuring the location of objects.

Camera-based techniques require a line of sight between the measuring cameras and the objects/people.

Radio Frequency (RF)-based approaches are also known. In particular, energy-based approaches have been disclosed by D. Ampeliotis and K. Berberidis, "Low complexity multiple acoustic source location in sensor networks based on energy measurements", Signal Processing, Elsevier, vol. 90, no. 4, pp. 1300-1312, 2010.

However, these approaches are impaired by multipath propagation phenomena in urban and indoor environments. Structural elements of buildings tend to produce errors to an unacceptable level. See, in particular, T. Ye, M. Walsh, P. Haigh, J. Barton, A. Mathewson, and B. O'Flynn, "Experimental Impulse Radio IEEE 802.15.4a UWB Based Wireless Sensor Localization Technology: Characterization, Reliability and Ranging", The Irish Signals and Systems Conference, Trinity College Dublin, June 23-24, 2011.

Commercial systems are "Google Eddystone" (see, inter alia, https://en.wikipedia.org/wiki/Eddystone, Google) and "Apple iBeacon" (see, inter alia, https://en.wikipedia.org/wiki/IBeacon). These systems are based on Bluetooth beacons detecting the presence of consumer devices in order to provide information to users.

Other methods are based on RFID, pseudolites, floor-sensors, WLAN, high-sensitive GNSS, cellular networks, and inertial navigation systems.

However, the prior art still fails to provide approaches with an acceptable trade-off between location/orientation measurement, and accuracy and coverage, namely in indoor scenarios.

US 2014/057655 A1 discloses a method for localizing a target device by means of two different devices which are a master device and a slave device. No beacon system is disclosed. No orthogonal codes or matched filters are suggested. No different receivers placed in different axes are disclosed.

US 2008/165059 A1 discloses a system for locating objects and for communication to be implanted in a bionic device implanted on a living body. A remote locator is arranged to communicate with a transponder or micro-transponder. The communications make use of a roundtrip Doppler shift technique.

The present invention

The present invention relates to a method for measuring the location of a communication device with respect to a three axis position system (for example defined by a beacon). The method comprises:

- Performing the following communication procedure:

  ◦ Transmitting a first signal from a main transmitter (e.g., placed at the origin of the axes);
  ◦ Detecting the first signal by the movable communication device;
  ◦ Transmitting a second signal from the movable communication device;
  ◦ Detecting the second signal by a main receiver and a first, a second, and a third axis-placed receivers;

- Determining the location of the movable communication device using time of flight, ToF, measurements of the first signals and the second signals,

wherein both the first and second signals are transmitted using orthogonal codes and are detected using matched filters.

A plurality of movable communication devices (e.g. a group of at least a first, a second and a third communication device) can be located. It has been noted, in fact, that the execution time of the measurements is enough low and deterministic. The plurality of movable communication devices can comprise a group of three movable communication devices (a first movable communication device, a second movable communication device, and a third movable communication device) positioned so as to span a plane. The orientation of the plane can be measured. The invention can comprise a step of determining the orientation of an object on the basis of the ToF measurements of the first signals and the second signals.

It is possible to iteratively select each of the movable communication devices and perform the communication procedure to the selected movable communication device. At each iteration, the second signal can also be detected by the non-selected communication devices. For example, the invention can be embodied by a method for measuring the location and/or orientation of a group of communication devices with respect to a three axis position system (e.g., defined by a beacon), the communication devices including at least a first, a second, and a third movable communication devices, the method providing for iteratively selecting, in turn, one of the communication devices and performing the following communication procedure: transmitting, from a main transmitter placed, a first signal; detecting, by the first, second and third movable communication devices, the first signal; transmitting, from the selected movable communication device, a second signal; and, using matched filters, detecting, by a main receiver and a first, a second, and a third axis-placed receivers (in some embodiments also by the non-selected communication devices), the second signal. The method can also provide a step of determining the location of each movable communication device using time of flight, ToF, measurements of the first signals and the second signals.

A determination step using ToF measurements of the second signal from the selected movable communication device, the main receiver and the axis-placed receivers can be implemented. In the case of a plurality of movable communication devices, a step of refining the measurements using ToF measurements of the second signal between the selected communication device and the non-selected communication devices.

The signals can be acoustic signals or radio-frequency, RF, signals.

It is also possible to provide a step of wirelessly transmitting signals encoding data with time information associated to timing values, in particular from each of the movable communication devices to the main receiver, and/or vice versa.

According to the invention, it is possible to measure the location, the movements and/or the orientation of an object or a living body such as an animal or a person by using the inventive method after having applied the communication device/s to the object or living body.

The invention also relates to a system for measuring location and/or orientation, comprising: at least a movable communication device and a movable communication device processor associated to the movable communication device, and a three-axis beacon system. The beacon system includes a main transmitter, a main receiver, a first, a second, and a third axis-placed receivers, respectively, placed at different axes of the beacon system, and a beacon processor. The beacon processor is configured to control the transmission of a first signal; the movable communication device processor is configured to control the detection of the first signal; the movable communication device processor is configured to control the transmission of a second signal from the movable communication device; the beacon processor is configured to control the detection of the second signal; and the beacon processor is also configured to determine the location of the movable communication device using ToF measurements of the first and second signals. The first and the second signals are orthogonal coded signals. Matched filters are used for the detection of codes associated to the first and second signals.

The invention also relates to a system structurally and functionally configured to perform a method according to the invention.

In some embodiments, a rigid structure can be provided for fixing the communication devices (e.g. so as to span plane).

The invention also relates to a system for measuring location and/or orientation comprising: at least a first, a second, and a third movable communication device positioned with respect to each other so as to span a plane; and movable communication device processors associated to the movable communication devices. The system comprises a three-axis beacon system including: a main transmitter (which can be positioned at the origin of the beacon system); a main receiver (which can be positioned at the origin of the beacon system); a first, a second, and a third axis-placed receiver, respectively, placed at different axes of the beacon system; and a beacon processor configured to iteratively select, in turn, each of the movable communication devices. The beacon processor controls the transmission of a first signal selecting one of the communication devices. Each of the movable communication device processors controls the detection of the first signal. Each of the movable communication device processors, when the associated movable communication device is selected, controls the transmission of a second signal. The beacon processor and the movable communication device processors associated to the non-selected communication devices control the detection of the second signal. The beacon processor determines the location of each movable communication device using ToF measurements of the first and second signals. The movable communication devices, the main receiver, and the axis-placed receivers use matched filters for the detection of codes associated to the first and second signals.

The invention also relates to a beacon system as a single, standalone product when configured for the inventive system and/or adapted to perform the inventive method. The invention also relates to a communication device as a single, standalone product, when configured for the inventive system and/or adapted to perform the inventive method.

The invention also relates to the use of the inventive system or method to localize and to measure the orientation of an object or a living body, such as an animal or person, associated to the communication devices.

The invention can be embodied by a keyless system, in which communication device/s is/are attached to (or incorporated as a single piece) to a structure embodying a key, and the beacon is attached to a fixed environment.

The invention can be embodied by a tracking system, in which communication device/s is/are carried by a person.

The invention can be embodied by a housing of a portable radio device (e.g., a tactical portable radio), wherein communication device/s is/are attached thereto.

The invention can be embodied using a mobile terminal, a cellular phone, a smartphone, a portable computer, a tablet, or similar mobile device, wherein communication device/s is/are attached thereto, e.g. to the housing.

The invention also relates to a tag to which communication device/s is/are applied or incorporated in one piece. The tag can be marketed independently of the beacon system, and can be associated to the particular beacon system after they have been purchased.

The invention can be embodied by a 3D video or audio system, in which communication device/s is/are associated to the user.

The invention can be embodied by a museum system (or a touristic system), in which communication device/s is/are attached (or are a part of) a device associated to the user (or the tourist), such as an audioguide (or another kind of portable terminal).

The invention can be embodied by hospital systems (or firefighting systems), in which communication device/s is/are attached are applied to one/more tag/s associated to a clinician or to a patient or to an equipment for carrying the patient (or to a firefighting element such as a vehicle).

The invention can be applied to electronics devices, or to electronic devices in general which can recognize and localize other electronic devices.

The invention also relates to the use of the inventive system and/or inventive method to localize an object or a living body. In particular, it is possible to apply the invention to an articulated object or an animal or a person. Communication devices can be associated to the object or living body. Mutual distances between different parts of the body (such as limbs) can be measured when different movable communication devices are placed on different parts of the body, such as limbs.

## Description of the drawings

The drawings permit to better understand embodiments of the invention.

- Figs. 1A and 1B show embodiments of the invention.
- Fig. 2 shows a scheme of a communication device that can be used to implement the invention.
- Fig. 3 shows a scheme of a beacon system that can be used to implement the invention.
- Fig. 4 shows a first signal transmitted by the beacon system in accordance to the invention.
- Fig. 5 shows a second signal transmitted by a communication system in response to the first signal.

## Constructive elements

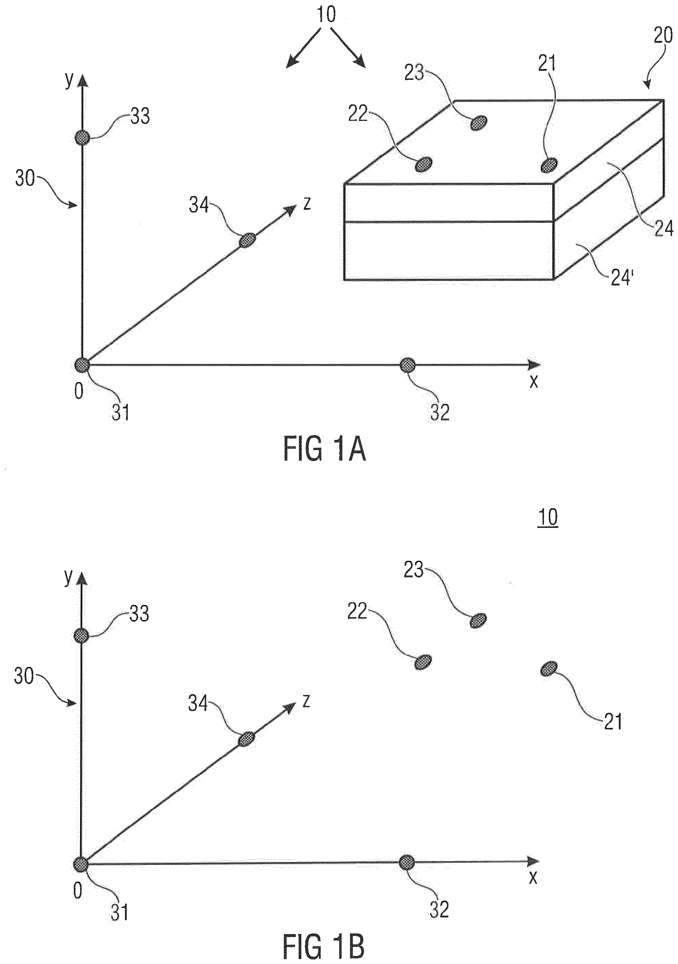

Fig. 1A shows a system 10, comprising at least one movable communication device. Here, the at least one movable communication device comprises a group of at least a first, a second and a third communication device 21, 22, 23. Here, the at least three communication devices 21, 22, 23 span a plane. Besides the three span-planning communication devices, other communication devices (either coplanar or non-coplanar) can be provided. Here, a movable element 20 is formed by the first, the second, and the third movable communication device 21, 22, 23 (also indicated with $CD_1$, $CD_2$, $CD_3$). Here, a structure 24 is provided to maintain the mutual positions between the movable communication devices 21-23. The structure 24 can be applied to a commercial item 24' (the shape of the structure 24 and the commercial item 24' can be different). At least some or all of the communication devices 21-23, the structure 24 and the commercial item 24' are fixed to each other (e.g., incorporated in one single piece, glued, screwed, nailed, or welded). Some or all of the communication devices 21-23, the structure 24 and the commercial item 24' can also be provided with means that permit to engagement/disengagement. In some embodiments, the structure 24 can be applied to a living body, in particular an animal, in particular a person.

Fig. 1B shows a system 10, comprising at least one movable communication device. Here, the at least one movable communication device comprises a first, a second and a third communication device 21, 22, 23 (CD1, CD2, CD3). Here, the communication devices 21, 22, 23 do not necessarily span a plane. The movable communication devices 21, 22, 23 can be movable with respect to each other, e.g. in view of a lack of a structure such as the structure 24.

The location the at least one movable communication device can be measured in a three-axis position system with three axes X, Y, Z which generate a space (in this embodiment, the axes X, Y, Z are orthogonal to each other).

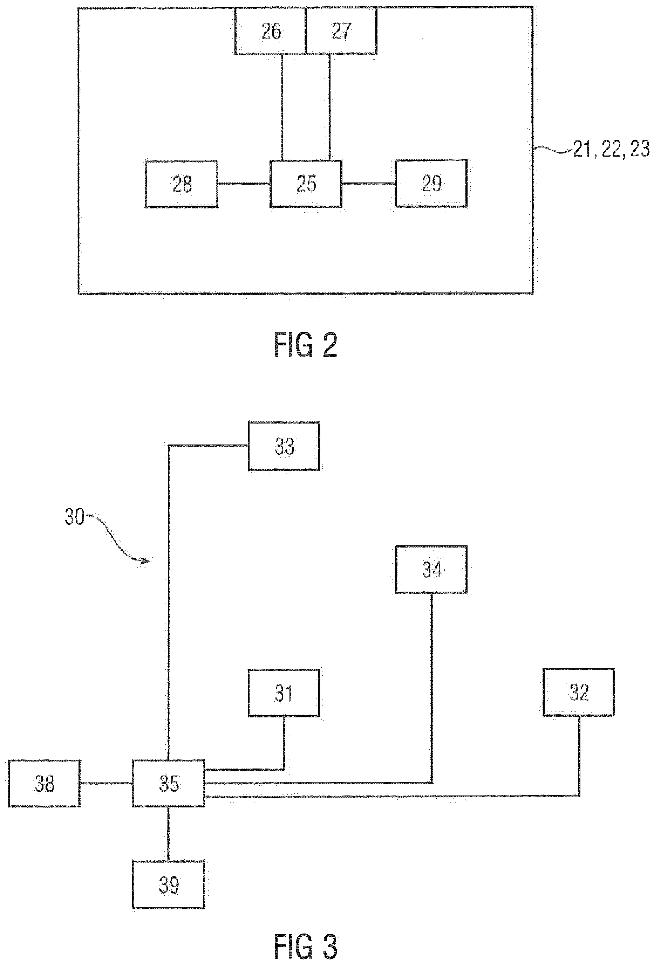

An example of movable communication device 21, 22, or 23 is provided in Fig. 2. A movable communication device processor 25 controls a receiver 26 (also indicated as $RX_{CD1}$, $RX_{CD2}$, $RX_{CD3}$) and a transmitter 27 (also indicated as $TX_{CD1}$, $TX_{CD2}$, $TX_{CD3}$). In particular, code generators and code detectors are also provided.

A counter section 28 (measuring time) is available to the movable communication device processor 25. The counter section 28 can contain one or more registers capable of counting time, in particular independently from each other. The movable communication device processor 25 can control the counter section 28, in particular by selecting and initializing registers of the counter section 28 to restart time measurement. The registers can be implemented as hardware register and/or software registers. The movable communication device processor 25 can also be connected to a storage means 29 to run a software memorized in the storage means 29 and to memorize data.

The movable communication device processor 25 can be implemented in ASIC, FPGA, or other electronic systems. In some embodiments, the movable communication device processor 25 and/or the counter section 28 and/or the storage means 29 can be implemented in one single controller.

The movable communication device processor 25 can also be connected to external processors through other input/output (I/O) means, e.g., a serial port, a USB port, etc. Through these I/O means and/or receiver 26 and a transmitter 27, the movable communication device processor 25 can also run a procedure of data upload to external processor entities, e.g. to upload values memorized in the storage means 29.

In some embodiments, different communication devices share at least some of the same hardware resources (processor, counter section, storage means, and/or I/O means) and can be placed in positions which are not the same of the transmitter and the receiver. However, when the communication devices need to be coplanar, the transmitters and the receivers are placed in positions which span a plane. A single processor can run different tasks for each communication device (e.g. using multitasking techniques) and control the transmitters and the receivers independently.

A matched filter is provided for the communication of each movable communication device. Matched filters can be implemented by hardware and/or software resources.

Orthogonal codes are also used for the communications. Codes with low cross correlation are preferred. GOLD or Kasami codes can be used. These codes also provide for appropriate identification between the communication devices.

Back to Figs. 1A and 1B, the three-axis position system can be obtained using a beacon system 30 (also indicated as BC). The beacon system 30 and the at least one communication device are structurally separated from each other. In this embodiment, the beacon system 30 and the at least one communication device communicate wirelessly to each other. Here, the beacon system 30 has no wired connection to any of the communication devices.

The beacon system 30 comprises a main transmitter/receiver 31 (also indicated as $TxRx_{BC0}$), which can be embodied by a single device or by a transmitter and receiver separated from each other. The main transmitter/receiver 31 is placed at the origin O of the space generated by the axes X, Y, Z, so as to simplify calculations.

The beacon system 30 also comprises a first, a second, and a third axis-placed receivers 32, 33, 34 (also indicated as $RX_{BCX}$, $RX_{BCY}$, $RX_{BCZ}$), respectively, placed at axes X, Y, Z. The axis-placed receivers 32, 33, 34 are in a fixed relative position with respect to each other. None of the axis-placed receivers is in a position coincident with the position of the transmitter/receiver 31.

A structure can be used to keep the relative position between the elements to the beacon system 30. Engaging/disengaging means can also be provided to attach the elements of the beacon system 30 to an existing structural element or environment.

A scheme of the beacon system 30 is shown in Fig. 3. A beacon processor 35 controls the transmitter/receiver 31 and the axis-placed receivers 32, 33, 34.

A counter section 38 (measuring time) is available to the beacon processor 35. The counter section 38 can contain one or more registers capable of counting time, in particular independently from each other. The beacon processor 35 can control the counter section 38, in particular by addressing and initializing one or more of the registers of the counter section 38 to restart time measurement. The registers can be implemented as hardware register and/or software registers. The beacon processor 35 can also be connected to a storage means 39 (which can include a RAM, a ROM., a flash memory, etc.) in which software is memorized. The storage means 39 can also comprise a data memory (e.g., a RAM) to memorize data (such as counter values obtained by the registers of the counter section 38). The beacon processor 35 can be implemented in ASIC, FPGA, or other electronic systems. In some embodiments, the beacon processor 35 and/or the counter section 38 and/or the storage means 39 can be implemented in one single controller.

The beacon processor 35 is connected to the transmitter/receiver 31 and the axis-placed receivers 32, 33, 34 through a connection such as a point-to-point star-connection. It is also possible to use a communication network or a wireless connection.

In some embodiments, the beacon processor can be embodied by a plurality of processor means. For example, the first, second, and third axis-placed receivers could be associated to respective first, second, and third CPUs, while the transmitter/receiver could be associated to a fourth CPU. The CPUs could communicate data with each other, e.g. by using a network or point-to-point connections. Devices such as DSPs can also be provided.

The beacon processor can also be formed by at least two different processors: a first processor which controls real-time activities of the beacon, and a second processor, separated from the beacon, which elaborates the data obtained by the beacon processor and by the movable communication devices processors, e.g. in offline sessions.

The beacon processor (or one of the processors forming it) can be placed remotely with respect to the transmitter/receiver 31 (which can be notwithstanding placed in a different place, such as the origin O).

The beacon processor 35 can also be connected, either permanently or temporarily, to external computer entities through other input/output (I/O) means, e.g., a serial port, a USB port, etc. Through these I/O means and/or the transmitter/receiver 31, the beacon processor 35 can also run a procedure of data upload to external computer entities, e.g. to upload values memorized in the storage means 39 (such as counter values obtained by the registers or other calculations performed by the beacon processor 35).

Advantageously, the beacon system also comprises code generators and code detectors for the transmissions and receptions of the beacon elements.

The signals that are transmitted and received are acoustic signals or RF signals. It is known in the art how to manufacture an acoustic transmitter or receiver and an RF transmitter or receiver.

The beacon system 30 is capable of obtaining the position and the orientation of the movable element 20, in particular by localizing each of the movable communication devices 21-23 in the three-axis position system.

The beacon system is configured to transmit and receive coded signals according to orthogonal codes (such as GOLD or Kasami codes).

Communication procedure

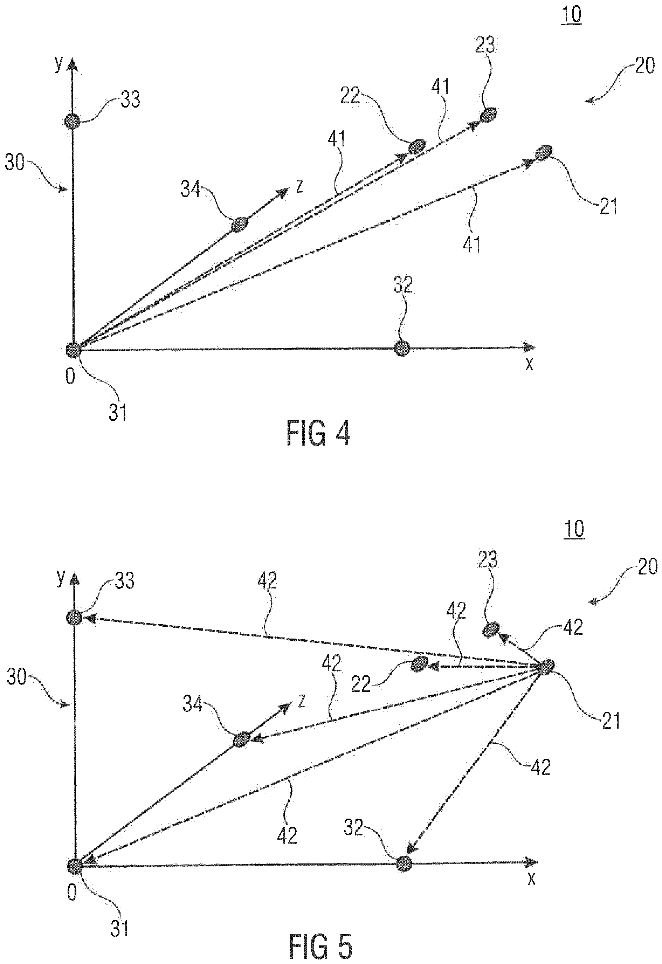

As can be seen from Fig. 4, the main transmitter/receiver 31 transmits a first signal 41. The at least one movable communication device 21 detects the first signal 41. As can be seen from Fig. 5, the at least one movable communication device 21 transmits a second signal 42, which is detected by the transmitter/receiver 31 and the first, second and third axis-placed receivers 32, 33, 34. By calculating the ToF of the signals, it will be possible to localize the at least one movable communication device 21.

Examples of the inventive method are here discussed.

The elements of the system 10 (Figs. 1A or 1B) can transmit and receive signals. The signals can be associated to events such as "REQUEST_TIMER_STOP", "TIMER_STOP", "CD_1_SENDS", and so on.

The beacon processor 35 can be configured to iteratively select (e.g., by cycling), in turn, one of the first, second, and third movable communication devices 21-23.

When the first movable communication device $CD_1$ (21) is selected, the beacon processor 35 can initialize the counter section 38, e.g. by initializing four registers (e.g., one register associated to the main transmitter/receiver 31 and one register for each of the axis-placed receivers 32, 33, 34).

With reference to Fig. 4, the main transmitter/receiver 31 (here placed in correspondence of the origin O) transmits a first communication signal 41 (multiple arrows refer to the same signal detected by different receivers). The selected communication device $CD_1$ (21) is addressed. In particular, the signal can encode the following events:

- "REQUEST_TIMER_STOP"

- "CD_1_SENDS".

The receiver 27 of each movable communication device $CD_1$, $CD_2$, $CD_3$ (21-23) receives the first signal 41. In particular, each communication device can detect "REQUEST_TIMER_STOP" by using matched filters.

At the detection of the first signal 41 (in particular of "REQUEST_TIMER_STOP"), the non-selected communication devices $CD_2$, $CD_3$ (22, 23) start counting time, each in particular starting counter of its counter section 28 (e.g. by initializing a register).

At the detection of the first signal 41 (in particular of "CD_1_SENDS"), the selected communication device $CD_1$ (21) can start waiting for a time slot $T_{wait}$, so as to wait for the other receivers to be ready.

As can be seen from Fig. 5, the selected communication device $CD_1$ (21) transmits a second signal 42 in response to the first signal 41. The second signal 42 can encode the event "TIMER_STOP".

The non-selected communication devices $CD_2$, $CD_3$ (22, 23), the main transmitter/receiver $TXRX_{BC0}$ (31), and each of the first, second, and third axis-placed receivers $Rx_{BCX}$, $Rx_{BCY}$, $Rx_{BCZ}$ (32, 33, 34) detect the second signal 42. Matched filters are used for the reception.

For each of these receivers, the detection of the second signal 42 is associated to a particular counter value CV(..) that can be acquired by one of the registers in one of the counter sections 28, 38.

These counter values CV(..) can be memorized in local memories of the beacon system and the communication devices, e.g. in the storage means 29 and 39.

The procedure above can be repeated by selecting the communication devices $CD_2$ and $CD_3$ (22 and 23). Further counter values are obtained.

A particular embodiment of the communication procedure (generalized for n communication devices) is resumed as follows:

1. *BC*

   1. selects $CD_1$
   2. starts counter
   3. sends codes

      ▪ *REQUEST_TIMER_STOP*
      ▪ *CD_1_SENDS*

2. $Rx_{CD_1}, ... Rx_{CD_n}$

   1. detect *REQUEST_TIMER_STOP* using matched filter

3. $CD_2 ... CD_n$

   1. start counter

4. $Tx_{CD_1}$

   1. waits until $Rx_{BC}$ is ready to receive: $T_{wait}$
   2. sends
      ▪ *TIMER_STOP*

5. $TxRx_{BC_O}, Rx_{BC_X}, Rx_{BC_Y} Rx_{BC_Z}, Rx_{CD_1}, Rx_{CD_2} ... Rx_{CD_n}$

   1. detect *TIMER_STOP* sent by $CD_1$ using matched filter
   2. read out counter value CV and store in memory

6. Go back to 1, repeat the cycle by iteratively selecting $CD_2 ... CD_n$
7. After all iterations, all counter values are in local memories of beacon system and communication devices.

Detection of the position

The distances are measured by determining the time of flight (ToF) of signals 41, 42, and by calculating each length associated to each ToF. Methods that can be implemented in the invention to calculate ToF values are here illustrated.

With reference to the iterative communication procedure discussed above, at the end of the first cycle, for the selected movable communication device $CD_1$, the following equations apply:

$$(1) \quad CV(Rx_{BC_O}) = ToF\big(Tx_{BC_0,} Rx_{CD_1}\big) + T_{wait} + ToF\big(Tx_{CD_1,} Rx_{BC_0}\big) + 2ToF_{code}$$

$$(2) \quad CV(Rx_{BC_X}) = ToF\big(Tx_{BC_0,} Rx_{CD_1}\big) + T_{wait} + ToF\big(Tx_{CD_1,} Rx_{BC_X}\big) + 2ToF_{code}$$

$$(3) \quad CV(Rx_{BC_Y}) = ToF\big(Tx_{BC_0,} Rx_{CD_1}\big) + T_{wait} + ToF\big(Tx_{CD_1,} Rx_{BC_Y}\big) + 2ToF_{code}$$

$$(4) \quad CV(Rx_{BC_Z}) = ToF\big(Tx_{BC_0,} Rx_{CD_1}\big) + T_{wait} + ToF\big(Tx_{CD_1,} Rx_{BC_Z}\big) + 2ToF_{code}$$

$CV(Rx_{BC_O})$, $CV(Rx_{BC_X})$, $CV(Rx_{BC_Y})$, $CV(Rx_{BC_Z})$ are counter values obtained, at the reception of the second signal 42, in registers associated to the main transmitter/receiver 31 and the first, second, and third axis-placed receivers 32, 33, 34, respectively.

$ToF(Tx_{BC_0}, Rx_{CD_1})$ is the time of flight of the first signal 41 from the main transmitter/receiver to the selected communication device.

$T_{wait}$ is a predefined time for waiting for the receivers to be prepared to the reception.

$ToF(Tx_{CD_1}, Rx_{BC_0})$, $ToF(Tx_{CD_1}, Rx_{BC_X})$, $ToF(Tx_{CD_1}, Rx_{BC_Y})$, $ToF(Tx_{CD_1}, Rx_{BC_Z})$ are the times of flight of the second signal 42 from the selected communication device to the main transmitter/receiver and the first, second, and third axis-placed receivers, respectively.

$ToF_{code}$ is the time necessary to prepare a signal (under the hypothesis that the same time is necessary for both the first signal 41 and the second signal 42; otherwise, different $ToF_{code}$ are used).

At the end of the second cycle (the selected movable communication device being $CD_2$) also the following equations apply:

$$CV(Rx_{BC_O}) = ToF(Tx_{BC_0}, Rx_{CD_2}) + T_{wait} + ToF(Tx_{CD_2}, Rx_{BC_0}) + 2ToF_{code}$$

$$CV(Rx_{BC_X}) = ToF(Tx_{BC_0}, Rx_{CD_2}) + T_{wait} + ToF(Tx_{CD_2}, Rx_{BC_X}) + 2ToF_{code}$$

$$CV(Rx_{BC_Y}) = ToF(Tx_{BC_0}, Rx_{CD_2}) + T_{wait} + ToF(Tx_{CD_2}, Rx_{BC_Y}) + 2ToF_{code}$$

$$CV(Rx_{BC_Z}) = ToF(Tx_{BC_0}, Rx_{CD_2}) + T_{wait} + ToF(Tx_{CD_2}, Rx_{BC_Z}) + 2ToF_{code}$$

The same applies, mutatis mutandis, for each of the iteratively selected movable communication devices.

The location of each communication device can be determined, in particular, by triangulation. The time of flight measurements can be measured by taking into account the propagation speed of the coded signals (sound or light).

In order to refine the determination of the position of the selected communication device (under the hypothesis that the first communication device $CD_1$ is selected), it is possible to apply the following equations:

$$(5)\ CV(Rx_{CD_2}) = ToF(Tx_{BC_0}, Rx_{CD_1}) - ToF(Tx_{BC_0}, Rx_{CD_2}) + T_{wait} + ToF(Tx_{CD_1}, Rx_{CD_2}) + 2ToF_{code}$$

$$(6)\ CV(Rx_{CD_3}) = ToF(Tx_{BC_0}, Rx_{CD_1}) - ToF(Tx_{BC_0}, Rx_{CD_3}) + T_{wait} + ToF(Tx_{CD_1}, Rx_{CD_3}) + 2ToF_{code}$$

$CV(Rx_{CD_1})$ and $CV(Rx_{CD_2})$ are counter values obtained, at the reception of the second signal 42, by registers associated to the non-selected communication devices (here, the second and third communication devices).

$ToF(Tx_{CD_1}, Rx_{CD_2})$ and $ToF(Tx_{CD_1}, Rx_{CD_3})$ are the ToFs of the second signal 42 transmitted by the first communication device (when selected) and received by the second and third communication devices (when non-selected).

At the end of the second cycle (i.e., the second communication device $CD_2$ being the selected communication device) the following equations apply:

$$CV(Rx_{CD_1}) = ToF(Tx_{BC_0}, Rx_{CD_2}) - ToF(Tx_{BC_0}, Rx_{CD_1}) + T_{wait} + ToF(Tx_{CD_2}, Rx_{CD_1}) + 2ToF_{code}$$

$$CV(Rx_{CD_3}) = ToF(Tx_{BC_0}, Rx_{CD_2}) - ToF(Tx_{BC_0}, Rx_{CD_3}) + T_{wait} + ToF(Tx_{CD_2}, Rx_{CD_3}) + 2ToF_{code}$$

Basically, equations like equations (1)-(6) are solved for each of the communication device which is iteratively selected. With three communication devices, 18 equations are implied. When the equations are solved, the counter values CV(...) are known values and permit to calculate the ToF values.

Measurement of the orientation

When at least three movable communication devices are structurally/functionally constrained to span a plane (e.g., Fig. 1A), it is possible to calculate the orientation of the plane. A method step performing the necessary mathematical conversions (e.g., outputting the angles between the spanned plane and one or more of the axes of the position system) can be provided.

More than three movable communication devices can be located. One or more non-coplanar movable communication devices can be provided further than the first, second, and third plane-spanning communication devices 21, 22, 23. An orientation measurement can notwithstanding be obtained.

The methods above can be implemented in the beacon processor 35 or in an external unit that have the counter values obtained by counter means 28, 38.

Additional procedure steps

It is also possible to define additional steps in which the at least one (or each of the three) movable communication device(s) transmits time stamps of acquired counter values (e.g., the values obtained by the registers of the counter means 28) to a control unit (which can be a part of the beacon processor 35).

A measurement can be obtained by repeating the communication procedure and by repeatedly transmitting the counter values using third signals (or wired communication in some embodiments). By repeating the procedure periodically (e.g. every 5 ms or less), it is possible to have the knowledge of the position and/or orientation of the at least one (or three) communication device(s) in real time.

A real-time implementation can be resumed as follows:

1-7. Steps 1-7 defined above (iterated for each of the communication devices $CD_1... CD_n$) 8. $Rx_{BCX}$, $Rx_{BCY}$, $Rx_{BCZ}$, $Rx_{CD1}$, $Rx_{CD_2}$ ... $Rx_{CD_n}$

    1. transmit times signals encoding counter values CV stored in their memories and/or registers

9. $TxRx_{BC_0}$

    1. receives the times signals

10. BC

    1. calculates the position and/or the orientation of the communication devices $CD_1...CD_n$

11. The cycle starts again with step 1 ($CD_1$ being selected).

In other embodiments, the counter values are memorized in the storage means 29 of the communication devices 21-23 and uploaded to an external unit (which can also be a part of the beacon processor) in an offline procedure. The same can also be performed for the counter values registered in the counter means 38.

Mutual position of the communication devices

As discussed above, some of or all the communication devices can be structurally connected to a fixed structure 24 to form a rigid entity (e.g., element 20 in Fig. 1A) whose position and orientation can be easily determined. The entity can be fixedly engaged (or even incorporated as a single piece) to the commercial item 24' whose position is to be determined. Alternatively, the entity can be structurally engageable/disengageable through engaging means to an object or a person (or a garment associated to the person), a helmet, or the like.

At a first glance, one could assume that multiple movable communication devices need to be in a fixed positional relationship with respect to each other: equations (1)-(6) could seem not suitable to take in account the relative motion between the communication devices (e.g., for motion blur).

It has been noted, however, that the communication devices can also be in a "quasi fixed motion", such that different communication devices are in relative motion with speed less than 40 km/h, in particular less than 20 km/h, more in particular less than 10 km/h. Accordingly, the communication procedure (in which all the communication devices are iteratively selected) shall take less than 5 ms, 10 ms, and 20 ms, respectively. Notably, the movements of the human body are not faster than 40 km/h: therefore, the method is particularly advantageous as a method for tracking the positions of parts of human/animal body (e.g., arms, hands, legs, feet, fingers, and/or head).

Hence, the present invention (in particular implemented as in Fig. 1B) also permits to track the absolute and/or mutual positions between the limbs of an articulated object or living body. Accordingly, the invention can be applied to sport activities.

For implementations as in Fig. 1A, the measurement of the ToFs between different movable communication devices 21-23 is not strictly mandatory. The following steps are not strictly essential: reception of the second signal 42 by the non-selected movable communication devices; step 5 of the communication procedure being performed by $Rx_{CD_1}$, $Rx_{CD_2}$ ... $Rx_{CD_n}$; and calculation of equations (5) and (6). However, the calculation of $ToF(Tx_{CD_1}, Rx_{CD_2})$ and $ToF(Tx_{CD_1}, Rx_{CD_3})$ permits to obtain redundant measurements which increase robustness and reliability.

Some of the advantages of the invention

The invention has been proven to present several advantages.

It has been noted that the multipath problem has been overcome, in particular thanks to the use of the matched filters.

The use of orthogonal, low cross correlation codes (such as GOLD and Kasami codes) provides for appropriate identification of the communication devices.

Further, the use of orthogonal codes is advantageous in that the beacon system can address and distinguish between individual communication devices. Moreover, the detection and the ToF measurements is more robust against noise when orthogonal codes are used.

The number of communication devices which can be located is limited by the length of the orthogonal codes only.

There is no need for calibration.

The invention exposes the advantage of low measurement times; it has been noted that, for 64 different communication devices, the total cycle time, i.e. time to execute 64 individual first-signal-second-signal cycles, lies below 5 ms, when RF signals are used.

The location accuracy is increased by the use of multiple measurements.

It is possible to measure the location and/or the orientation of an object or a person to which the communication devices are associated.

The measurements imply low uncertainties in a range that is limited only by the range of the receivers and transmitters.

As compared to the energy-based approaches (which require temporal integration which is both time consuming and computing-resource-consuming), the determinations based on ToF require low measurement times.

In particular when the invention is implemented with RF signals, accuracy has been proven to arrive at less than 1 cm, which is better than known approaches based on RFID, pseudolites, infrared, floor-sensors, WLAN, high-sensitive GNSS, cellular networks, UWB, and inertial navigation systems.

The coverage can arrive at more than 10 km, which is better than common approaches based on RFID, pseudolites, infrared, floor-sensors, WLAN, cellular networks, UWB, and inertial navigation systems.

Further embodiments of the invention

Advantageous embodiments of the invention are here disclosed and discussed. Reference is made to the claims, the drawings and the other passages of the description.

The invention can be embodied by a keyless system (or a vehicle implementing a keyless go system), in which at least one (or at least three) communication device(s) are engaged to the structure 24 attached to a commercial item such as a key 24' (e.g., a vehicle key such as a car key) and the beacon system 30 is engaged to a fixed environment (such as a vehicle cabin). Accordingly, it is possible to easily detect the position and the orientation of the vehicle key.

The invention can be embodied by a tracking system, in particular in which the structure 24 is carried by a person.

In particular, a structure 24 can be attached to or incorporated by an item 24' such as a housing of a portable radio device (e.g., a tactical portable radio). The at least one or at least three plane-spanning communication device(s) can be attached to the structure 24.

The structure 24 can also be attached to or incorporated by an item 24' such as a mobile terminal, a cellular phone, a smartphone, a portable computer, a tablet, or similar mobile device. The at least one or at least three plane-spanning communication device(s) can be attached to the structure 24.

The invention can also be embodied by an application ("app") for an item 24' such as a mobile terminal, a cellular phone, a smartphone, a portable computer, a tablet, or similar mobile device. It is possible to provide for additional method steps:

- Selecting, in particular by a user input, a person (e.g., from an address book to which the app has knowledge) associated to the item 24' to which the at least one or at least three plane-spanning communication device(s) are attached;
- Measuring the position of the item 24';
- Comparing if the selected person is positioned within a predetermined range from the user;

- In case of positive comparison, emitting a warning signal to the user.

The last two method steps can be substituted by or associated to a notification of the position of the selected person.

The invention also permits to manufacture tags (e.g., implemented as a structure 24 or item 24') to which the at least one or at least three plane-spanning communication device(s) is (are) applied. The tags can be shipped and marketed independently of the beacon system 30, and can be associated to the particular beacon system 30 through an initialization procedure.

The invention can also be embodied by a 3D audio system, in which a portable item 24' (to which to the structure 24 with the at least one or at least three plane-spanning communication device/s is attached or incorporated) is associated to a user. Accordingly, the invention can provide for the additional method steps:

- Determining the position of the user in relationship to loudspeakers (associated, for example, to the beacon system 30);
- Modifying the audio data based on the position of the user.

The invention can also be applied in a 3D video system: a portable item 24' (such as smart glasses), can be engaged with the structure 24 with the at least one or at least three plane-spanning communication device(s). Accordingly, the invention can provide for the additional method steps:

- Determining the position of the user in relationship to a 3D display (associated, for example, to the beacon system 30);
- Modifying the 3D visual data based on the position of the user.

The invention can also be applied in a museum system, in which a structure 24 with the at least one or at least three plane-spanning communication device(s) can be attached or incorporated to a device 24' associated to the user, in particular an audioguide. Accordingly, the invention can provide for the additional method steps:

- Determining the position or orientation of the user in relationship to the spaces of the museum (which can be associated, for example, to the beacon system 30);
- Providing information related to the museum attractions placed in the space of the museum where the user is localized.

The invention can also be applied in a touristic system, in which a structure 24 (with the at least one or at least three plane-spanning communication device/s) is attached to or incorporated to a device 24' associated to a tourist, in particular an audioguide or a portable terminal of the tourist. Accordingly, the invention can provide for the additional method steps:

- Determining the position of the user in relationship to places to be visited (which can be associated, for example, to the beacon system 30);
- Providing information related to the elements placed in the places visited by the tourist.

Similarly, the invention can also be embodied in hospital systems, in which a structure 24 (with the at least one or at least three plane-spanning communication device/s attached thereto) is applied to a tag 24' that can be associated to a clinician or a patient or an equipment for carrying the patient, such as prams, perambulators, carriages, etc. The beacon system 30 can be associated to internal rooms of the hospital.

The invention can also be embodied in firefighting systems, in which a structure 24, with the at least one or at least three plane-spanning communication device/s attached thereto, is applied to a tag 24' associated to a firefighting element. The beacon system 30 can be associated to a firefighting vehicle.

The invention can also be embodied in consumer electronics devices: a beacon system 30 can be associated to a first consumer electronics device, and a structure 24 (with the at least one or at least three plane-spanning communication device/s) can be associated to a second consumer electronics device 24' (the consumer electronic devices including, inter alia, mobile terminals, cellular phones, smartphones, portable computers, tablets, game stations, radio devices, TV devices, and remote controls).

The inventive method can also be implemented in a procedure (in particular an "app") and can comprise the following steps:

- Recognizing a second device 24' (associated to communication devices 21-23) placed within a predetermined range from the first device (associated to a beacon system 30);
- Performing the inventive method to track the closeness of the first and second devices;

- In case of non-closeness, emitting a warning signal to the user.

This inventive embodiment permits to implement methods for preventing that a user forgets the second device, and/or methods informing that the second device has been stolen.

The invention can be implemented in which one or more movable communication devices are associated to different parts of the body of a human or animal, to analyze an articulated movement (e.g. for measuring sport performance). This system is preferable to state of the art systems that use visual markers and cameras: as a line of sight between the beacon and the movable communication device is not necessary, self-occlusions are avoided.

Several embodiments of the invention refer to systems in which the distance between the communication devices is inferior to 100 km, in particular 10 km, more in particular 1 km, more in particular 10 m, and even more in particular 1 m, or less.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus. Some embodiments according to the invention comprise a data carrier having electronically readable control signals, which are capable of cooperating with a programmable computer system, such that one of the methods described herein is performed.

Generally, embodiments of the present invention can be at least in part implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A method for measuring the location of a movable communication device (21) with respect to a three non-coplanar axis position system (X, Y, Z) defined by a beacon system (30) including a beacon processor (35) and the following elements in fixed position with respect to each other:

   ◦ A main transmitter (31) placed at the origin (O) of the non-coplanar axis position system (X, Y, Z);
   ◦ A main receiver (31) placed at the origin (O) of the non-coplanar axis position system (X, Y, Z);
   ◦ A first, a second, and a third axis-placed receivers (32-34), respectively, placed at the different axes (X, Y, Z) but not at the origin (O) of the non-coplanar axis position system (X, Y, Z),

   the method comprising:

   - Performing the following communication procedure:

      ◦ Transmitting a first signal (41) from the main transmitter (31) under the control of the beacon processor (35);
      ◦ Detecting the first signal (41) by the movable communication device (21);
      ◦ In response to the first signal detection, transmitting a second signal (42) from the movable communication device (21); and
      ◦ Detecting the second signal (42) by the main receiver (31) and the first, second, and third axis-placed receivers (32-34) under the control of the beacon processor (35);

   - Determining, under the control of the beacon processor (35), the location of the movable communication device (21) using time of flight, ToF, measurements of the first and of the second signals (41, 42),

wherein both the first and second signals (41, 42) are transmitted using orthogonal codes and are detected using matched filters.

2. The method of claim 1, measuring the location of a plurality of movable communication devices (21-23).

3. The method of claim 2, wherein the plurality of movable communication devices (21-23) comprises a group of a first, a second and a third communication devices (21-23).

4. The method of claim 3 further comprising a step of determining the orientation of a plane spanned by the first, the second and the third communication devices (21-23) on the basis of the ToF measurements of the first signals (41) and the second signals (42).

5. The method according to any of claims 2-4, **characterized by** iteratively selecting each of the movable communication devices (21-23) and performing the communication procedure to the selected movable communication device (21).

6. The method according to claims 5, wherein the second signal (42) is also detected by the non-selected communication devices (22, 23).

7. The method of claim 6, wherein the determining step comprises:

   - A gross-determination step using ToF measurements of the second signal (42) from the selected movable communication device (21), the main receiver (31) and the axis-placed receivers (32-34); and
   - A step of refining the measurements using ToF measurements of the second signal (42) between the selected communication device (21) and the non-selected communication devices (22, 23).

8. The method according to any of the preceding claims, wherein the signals (41, 42) are acoustic signals or radio-frequency, RF, signals.

9. The method according to any of the preceding claims, further comprising:
   wirelessly transmitting signals encoding data with time information associated to timing values.

10. A method for measuring the location, the movements and/or the orientation of an object (24') or part of an articulated object or parts/limbs of a living body such as an animal or a person, the method comprising:
   using the method of any of the preceding claims after having applied the communication device or devices (21-23) to the object (24') or living body.

11. A three-axis beacon system (30) for measuring the location of a movable communication device (21), the beacon system (30) including a beacon processor (35) and the following elements in fixed position with respect to each other:

   ○ A main transmitter (31) placed at the origin (O) of the non-coplanar axis position system (X, Y, Z);
   ○ A main receiver (31) placed at the origin (O) of the non-coplanar axis position system (X, Y, Z);
   ○ A first, a second, and a third axis-placed receivers (32-34), respectively, placed at different non-coplanar axes (X, Y, Z), but not at the origin (O), of the beacon system (30),

   wherein the beacon processor (35) is configured to:

   - control the transmission of a first signal (41) from the main transmitter (31);
   - control the detection of the second signal (42) by the main receiver (31) and the first, second, and third axis-placed receivers (32-34); and
   - determine the location of the movable communication device (21) using time of flight, ToF, measurements of the first and second signals (41, 42),

   wherein the beacon system (30) is structurally and functionally configured so as to transmit the first signal (41) and receive the second signal (42) as orthogonally coded signals, and
   the main receiver (31) and the axis-placed receivers (32-34) are configured to use matched filters for the detection of codes associated to the second signal (42).

12. A system (10) for measuring location and/or orientation, the system comprising:

- At least a movable communication device (21); and
- A movable communication device processor (25) associated to the movable communication device (21); and

The three-axis beacon system (30) of claim 11, wherein:

- The movable communication device processor (25) is configured to control the detection of the first signal (41) by the movable communication device (21) and the transmission of a second signal (42) from the movable communication device (21);

wherein the system is structurally and functionally configured so that both the first and the second signals (41, 42) are orthogonally coded signals, and
the movable communication device (21), the main receiver (31), and the axis-placed receivers (32-34) are configured to use matched filters for the detection of codes associated to the first and second signals (41, 42).

13. The system of claim 12 structurally and functionally configured to perform a method according to any of claims 1-10.

14. The system of any of claims 12 or 13, further comprising a rigid structure (24) to which at least some of the communication devices (21-23) are fixed.

15. Use of the system of any of claims 12-14 to localize an object or a living body, such as an animal or a person, associated to the one or more communication devices (21-23).

**Patentansprüche**

1. Ein Verfahren zum Messen des Orts einer beweglichen Kommunikationsvorrichtung (21) in Bezug auf ein Nicht-Koplanare-Dreiachsen-Positionssystem (X, Y, Z), das definiert ist durch ein Funkfeuersystem (30) mit einem Funkfeuerprozessor (35) und den folgenden Elementen an festen Positionen in Bezug aufeinander:

   ∘ einem Hauptsender (31), der an dem Ursprung (O) des nicht koplanaren Achsenpositionssystems (X, Y, Z) platziert ist;
   ∘ einem Hauptempfänger (31), der an dem Ursprung (O) des nicht koplanaren Achsenpositionssystems (X, Y, Z) platziert ist;
   ∘ einem ersten, zweiten und dritten achsenplatzierten Empfänger (32-34), die jeweils auf den unterschiedlichen Achsen (X, Y, Z) platziert sind, jedoch nicht an dem Ursprung (O) des nicht koplanaren Achsenpositionssystems (X, Y, Z),

   wobei das Verfahren folgende Schritte aufweist:

   - Durchführen der folgenden Kommunikationsprozedur:

     ∘ Senden eines ersten Signals (41) von dem Hauptsender (31) unter der Steuerung des Funkfeuerprozessors (35);
     ∘ Erfassen des ersten Signals (41) durch die bewegliche Kommunikationsvorrichtung (21);
     ∘ ansprechend auf das Erfassen des erstes Signals, Senden eines zweiten Signals (42) von der beweglichen Kommunikationsvorrichtung (21); und
     ∘ Erfassen des zweiten Signals (42) durch den Hauptempfänger (31) und den ersten, zweiten und dritten achsenplatzierten Empfänger (32-34) unter der Steuerung des Funkfeuerprozessors (35);

   - Bestimmen des Orts der beweglichen Kommunikationsvorrichtung (21) unter Verwendung von Flugzeit-, ToF-, Messungen des ersten und des zweiten Signals (41, 42) unter der Steuerung des Funkfeuerprozessors (35),

   wobei sowohl das erste als auch das zweite Signal (41, 42) unter Verwendung orthogonaler Codes übertragen und unter Verwendung angepasster Filter erfasst werden.

2. Das Verfahren gemäß Anspruch 1, das den Ort einer Mehrzahl beweglicher Kommunikationsvorrichtungen (21-23) misst.

3. Das Verfahren gemäß Anspruch 2, bei dem die Mehrzahl beweglicher Kommunikationsvorrichtungen (21-23) eine Gruppe aus einer ersten, einer zweiten und einer dritten Kommunikationsvorrichtung (21-23) aufweist.

4. Das Verfahren gemäß Anspruch 3, das ferner einen Schritt eines Bestimmens der Orientierung einer Ebene, die durch die erste, die zweite und die dritte Kommunikationsvorrichtung (21-23) aufgespannt ist, auf der Basis der ToF-Messungen der ersten Signale (41) und der zweiten Signale (42) aufweist.

5. Das Verfahren gemäß einem der Ansprüche 2-4, das **gekennzeichnet ist durch** iteratives Auswählen jeder der beweglichen Kommunikationsvorrichtungen (21-23) und Durchführen der Kommunikationsprozedur an der ausgewählten beweglichen Kommunikationsvorrichtung (21).

6. Das Verfahren gemäß Anspruch 5, bei dem das zweite Signal (42) auch durch die nicht ausgewählten Kommunikationsvorrichtungen (22, 23) erfasst wird.

7. Das Verfahren gemäß Anspruch 6, bei dem der Bestimmungsschritt folgende Schritte aufweist:

einen Grobbestimmungsschritt unter Verwendung von ToF-Messungen des zweiten Signals (42) von der ausgewählten beweglichen Kommunikationsvorrichtung (21), dem Hauptempfänger (31) und den achsenplatzierten Empfängern (32-34); und
einen Schritt eines Verfeinerns der Messungen unter Verwendung von ToF-Messungen des zweiten Signals (42) zwischen der ausgewählten Kommunikationsvorrichtung (21) und den nicht ausgewählten Kommunikationsvorrichtungen (22, 23).

8. Das Verfahren gemäß einem der vorherigen Ansprüche, bei dem die Signale (41, 42) akustische Signale oder Hochfrequenz-, HF-, Signale sind.

9. Das Verfahren gemäß einem der vorherigen Ansprüche, das ferner folgenden Schritt aufweist:
drahtloses Übertragen von Signalen, die Daten mit Zeitinformationen codieren, die Zeitgebungswerten zugeordnet sind.

10. Ein Verfahren zum Messen des Orts, der Bewegungen und/oder der Orientierung eines Gegenstands (24') oder eines Teils eines Gelenkgegenstands oder von Teilen/Gliedmaßen eines lebenden Körpers, wie zum Beispiel eines Tiers oder einer Person, wobei das Verfahren folgenden Schritt aufweist:
Verwenden des Verfahrens gemäß einem der vorherigen Ansprüche, nachdem die Kommunikationsvorrichtung oder -vorrichtungen (21-23) an dem Gegenstand (24') oder dem lebenden Körper angebracht wurden.

11. Ein Dreiachsen-Funkfeuersystem (30) zum Messen des Orts einer beweglichen Kommunikationsvorrichtung (21), wobei das Funkfeuersystem (30) einen Funkfeuerprozessor (35) und die folgenden Elemente an fester Position in Bezug aufeinander aufweist:

◦ einen Hauptsender (31), der an dem Ursprung (O) des nicht koplanaren Achsenpositionssystems (X, Y, Z) platziert ist;
◦ einen Hauptempfänger (31), der an dem Ursprung (O) des nicht koplanaren Achsenpositionssystems (X, Y, Z) platziert ist;
◦ einen ersten, zweiten und dritten achsenplatzierten Empfänger (32-34), die jeweils auf unterschiedlichen nicht koplanaren Achsen (X, Y, Z) platziert sind, jedoch nicht an dem Ursprung (O), des Funkfeuersystems (30),

wobei der Funkfeuerprozessor (35) ausgebildet ist zum:

- Steuern der Sendung eines ersten Signals (41) von dem Hauptsender (31);
- Steuern der Erfassung des zweiten Signals (42) durch den Hauptempfänger (31) und den ersten, zweiten und dritten achsenplatzierten Empfänger (32-34); und
- Bestimmen des Orts der beweglichen Kommunikationsvorrichtung (21) unter Verwendung von Flugzeit-, ToF-, Messungen des ersten und des zweiten Signals (41,42),

wobei das Funkfeuersystem (30) strukturmäßig und funktionell so ausgebildet ist, dass es als orthogonal codierte Signale das erste Signal (41) sendet und das zweite Signal (42) empfängt, und
der Hauptempfänger (31) und die achsenplatzierten Empfänger (32-34) ausgebildet sind, um angepasste Filter für die Erfassung von Codes zu verwenden, die dem zweiten Signal (42) zugeordnet sind.

12. Ein System (10) zum Messen eines Orts und/oder einer Orientierung, wobei das System folgende Merkmale aufweist:

- zumindest eine bewegliche Kommunikationsvorrichtung (21);und
- einen Bewegliche-Kommunikationsvorrichtung-Prozessor (25), der der beweglichen Kommunikationsvorrichtung (21) zugeordnet ist; und
- das Dreiachsen-Funkfeuersystem (30) gemäß Anspruch 11,
wobei:

der Bewegliche-Kommunikationsvorrichtung-Prozessor (25) ausgebildet ist, um die Erfassung des ersten Signals (41) durch die bewegliche Kommunikationsvorrichtung (21) und das Senden eines zweiten Signals (42) von der beweglichen Kommunikationsvorrichtung (21) zu steuern;
wobei das System strukturmäßig und funktionell so ausgebildet ist, dass sowohl das erste als auch das zweite Signal (41, 42) orthogonal codierte Signale sind, und
die bewegliche Kommunikationsvorrichtung (21), der Hauptempfänger (31) und die achsenplatzierten Empfänger (32-34) ausgebildet sind, um angepasste Filter für die Erfassung von Codes zu verwenden, die dem ersten und dem zweiten Signal (41, 42) zugeordnet sind.

13. Das System gemäß Anspruch 12, das strukturmäßig und funktionell ausgebildet ist, um ein Verfahren gemäß einem der Ansprüche 1-10 durchzuführen.

14. Das System gemäß einem der Ansprüche 12 oder 13, das ferner eine starre Struktur (24) aufweist, an der zumindest einige der Kommunikationsvorrichtungen (21-23) fixiert sind.

15. Verwendung des Systems gemäß einem der Ansprüche 12-14 zum Lokalisieren eines Gegenstands oder eines lebenden Körpers, wie zum Beispiel eines Tiers oder einer Person, der der einen oder den mehreren Kommunikationsvorrichtungen (21-23) zugeordnet ist.

## Revendications

1. Procédé de mesure de l'emplacement d'un dispositif de communication mobile (21) par rapport à un système de positionnement à trois axes non coplanaires (X, Y, Z) défini par un système de balise (30) comportant un processeur de balise (35) et les éléments suivants en position fixe l'un par rapport à l'autre:

◦ un émetteur principal (31) placé à l'origine (O) du système de positionnement d'axe non coplanaire (X, Y, Z);
◦ un récepteur principal (31) placé à l'origine (O) du système de positionnement d'axe non coplanaire (X, Y, Z);
◦ un premier, un deuxième et un troisième récepteur (32 à 34) placés respectivement sur les différents axes (X, Y, Z), mais pas à l'origine (O), du système de positionnement d'axe non coplanaire (X, Y, Z),

le procédé comprenant les faits de:

- réaliser la procédure de communication suivante:

◦ émettre un premier signal (41) depuis l'émetteur principal (31) sous le contrôle du processeur de balise (35);
◦ détecter le premier signal (41) par le dispositif de communication mobile (21);
◦ en réponse à la détection du premier signal, émettre un deuxième signal (42) depuis le dispositif de communication mobile (21); et
◦ détecter le deuxième signal (42) par le récepteur principal (31) et les premier, deuxième et troisième récepteurs placés sur les axes (32 à 34) sous le contrôle du processeur de balise (35);

- déterminer, sous le contrôle du processeur de balise (35), l'emplacement du dispositif de communication mobile (21) à l'aide des mesures de temps de vol, ToF, du premier et du deuxième signal (41, 42),

dans lequel les premier et deuxième signaux (41, 42) sont émis à l'aide de codes orthogonaux et sont détectés à l'aide de filtres adaptés.

**2.** Procédé selon la revendication 1, mesurant l'emplacement d'une pluralité de dispositifs de communication mobiles (21 à 23).

**3.** Procédé selon la revendication 2, dans lequel la pluralité de dispositifs de communication mobiles (21 à 23) comprend un groupe d'un premier, d'un deuxième et d'un troisième dispositif de communication (21 à 23).

**4.** Procédé selon la revendication 3, comprenant par ailleurs une étape consistant à déterminer l'orientation d'un plan couvert par les premier, deuxième et troisième dispositifs de communication (21 à 23) sur base des mesures de ToF des premiers signaux (41) et des deuxièmes signaux (42).

**5.** Procédé selon l'une quelconque des revendications 2 à 4, **caractérisé par** le fait de sélectionner de manière itérative chacun des dispositifs de communication mobiles (21 à 23) et de réaliser la procédure de communication avec le dispositif de communication mobile sélectionné (21).

**6.** Procédé selon la revendication 5, dans lequel le deuxième signal (42) est également détecté par les dispositifs de communication non sélectionnés (22, 23).

**7.** Procédé selon la revendication 6, dans lequel l'étape de détermination comprend:

- une étape de détermination brute à l'aide de mesures de ToF du deuxième signal (42) du dispositif de communication mobile sélectionné (21), du récepteur principal (31) et des récepteurs placés sur les axes (32 à 34); et
- une étape d'affinage des mesures à l'aide de mesures de ToF du deuxième signal (42) entre le dispositif de communication sélectionné (21) et les dispositifs de communication non sélectionnés (22, 23).

**8.** Procédé selon l'une quelconque des revendications précédentes, dans lequel les signaux (41, 42) sont des signaux acoustiques ou des signaux de radiofréquence, RF.

**9.** Procédé selon l'une quelconque des revendications précédentes, comprenant par ailleurs le fait de:
émettre sans fil des signaux codant des données avec des informations temporelles associées à des valeurs de synchronisation.

**10.** Procédé de mesure de l'emplacement, des mouvements et/ou de l'orientation d'un objet (24') ou d'une partie d'un objet articulé ou de parties/membres d'un corps vivant tel qu'un animal ou une personne, comprenant le fait de:
utiliser le procédé selon l'une quelconque des revendications précédentes après avoir appliqué le ou les dispositifs de communication (21 à 23) à l'objet (24') ou au corps vivant.

**11.** Système de balise à trois axes (30) pour mesurer l'emplacement d'un dispositif de communication mobile (21), le système de balise (30) comportant un processeur de balise (35) et les éléments suivants en position fixe l'un par rapport à l'autre:

◦ un émetteur principal (31) placé à l'origine (O) du système de positionnement d'axe non coplanaire (X, Y, Z);
◦ un récepteur principal (31) placé à l'origine (O) du système de positionnement d'axe non coplanaire (X, Y, Z);
◦ un premier, un deuxième et un troisième récepteur (32 à 34) placés respectivement sur différents axes non coplanaires (X, Y, Z), mais pas à l'origine (O), du système de balise (30),

dans lequel le processeur de balise (35) est configuré pour:

- commander l'émission d'un premier signal (41) depuis l'émetteur principal (31);
- commander la détection du deuxième signal (42) par le récepteur principal (31) et les premier, deuxième et troisième récepteurs placés sur les axes (32 à 34); et
- déterminer l'emplacement du dispositif de communication mobile (21) à l'aide des mesures de temps de vol, ToF, des premier et deuxième signaux (41, 42),

dans lequel le système de balise (30) est configuré de manière structurelle et fonctionnelle de manière à émettre le premier signal (41) et à recevoir le deuxième signal (42) sous forme de signaux codés orthogonalement, et le récepteur principal (31) et les récepteurs placés sur les axes (32 à 34) sont configurés pour utiliser des filtres adaptés pour la détection de codes associés au deuxième signal (42).

**12.** Système (10) pour mesurer l'emplacement et/ou l'orientation, le système comprenant:

- au moins un dispositif de communication mobile (21); et
- un processeur de dispositif de communication mobile (25) associé au dispositif de communication mobile (21); et

le système de balise à trois axes (30) selon la revendication 11, dans lequel:

- le processeur de dispositif de communication mobile (25) est configuré pour commander la détection du premier signal (41) par le dispositif de communication mobile (21) et l'émission d'un deuxième signal (42) depuis le dispositif de communication mobile (21);

dans lequel le système est configuré de manière structurelle et fonctionnelle de sorte que tant le premier que le deuxième signal (41, 42) soient des signaux codés orthogonalement, et le dispositif de communication mobile (21), le récepteur principal (31) et les récepteurs placés sur les axes (32 à 34) sont configurés pour utiliser des filtres adaptés pour la détection de codes associés aux premier et deuxième signaux (41, 42).

**13.** Système selon la revendication 12 configuré de manière structurelle et fonctionnelle pour réaliser un procédé selon l'une quelconque des revendications 1 à 10.

**14.** Système selon l'une quelconque des revendications 12 ou 13, comprenant par ailleurs une structure rigide (24) à laquelle sont fixés au moins certains des dispositifs de communication (21 à 23).

**15.** Utilisation du système selon l'une quelconque des revendications 12 à 14 pour localiser un objet ou un corps vivant, tel qu'un animal ou une personne, associé aux un ou plusieurs dispositifs de communication (21 à 23).

FIG 1A

FIG 1B

FIG 2

FIG 3

EP 3 193 191 B1

FIG 4

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014057655 A1

- US 2008165059 A1

### Non-patent literature cited in the description

- Low complexity multiple acoustic source location in sensor networks based on energy measurements. **D. AMPELIOTIS ; K. BERBERIDIS.** Signal Processing. Elsevier, 2010, vol. 90, 1300-1312

- Experimental Impulse Radio IEEE 802.15.4a UWB Based Wireless Sensor Localization Technology: Characterization, Reliability and Ranging. **T. YE ; M. WALSH ; P. HAIGH ; J. BARTON ; A. MATHEWSON ; B. O'FLYNN.** The Irish Signals and Systems Conference. Trinity College Dublin, 23 June 2011